# EUROPEAN PATENT APPLICATION

(11) **EP 0 567 086 A1**
(43) Date of publication of application: **27.10.1993**
(21) Application number: 93106419.0
(22) Date of filing: 21.04.1993
(51) Int. Cl.: G11B 7/26, G11B 7/24, G11B 7/14

(54) **Double-sided optical information carrier medium and method of making same**

(30) Priority: 24.04.1992 JP 106343/92; 11.11.1992 JP 300750/92; 11.11.1992 JP 300719/92
(71) Applicant: MATSUSHITA ELECTRIC INDUSTRIAL CO., LTD., Kadoma-shi, Osaka-fu, 571 (JP)
(72) Inventor: Yoshioka, Kazumi, Yawata-shi, Kyoto-fu (JP); Akiyama, Tetsuya, Habikino-shi, Osaka-fu (JP); Inoue, Kazuo, Osaka-shi, Osaka-fu (JP); Murai, Junichi, Kobe-shi, Hyogo-ken (JP); Isomura, Hidemi, Osaka-shi, Osaka-fu (JP)
(74) Representative: Eisenführ, Speiser & Partner

(57) **Abstract**

A double-sided optical information carrier medium is made up of first and second substrates (7, 8) bonded to each other with respective signal surfaces (9) opposed. The signal surface (9) of each of the two substrates (7, 8) has a signal region and a generally flat region defined radially inwardly of the signal region. The signal region has address information recorded thereon in a direction circumferentially of the information carrier medium. The direction of recording of the address information on the first substrate (7) coincides with that of recording of the address information on the second substrate (8). The information carrier medium has first and second positioning holes (13, 14) extending through the first and second substrates (7, 8) at the location of the respective flat regions. The first and second positioning holes (13, 14) are detected either optically or mechanically and are matched in position with each other, thereby matching the position of the address information on the first substrate (7) with that of the address information on the second substrate (8).

## Description

### BACKGROUND OF THE INVENTION

### Field of the Invention

The present invention relates generally to an information carrier medium for use in, for example, a memory unit of a computer, and more particularly to a double-sided optical information carrier medium capable of storing information on both surfaces thereof.

### Description of the Prior Art

Double-sided optical discs are generally used to store an information content approximately two times greater than that stored on a single-sided disc. In applications where a double-sided optical disc is utilized in a memory unit of a computer, it is desirable that information can be recorded, reproduced or erased on or from both surfaces thereof without turning the optical disc upside down or changing the direction of rotation thereof in order to reduce the access time, and there have been strong demands towards the realization of a double-sided optical disc having a doubled storage capacity both nominally and virtually.

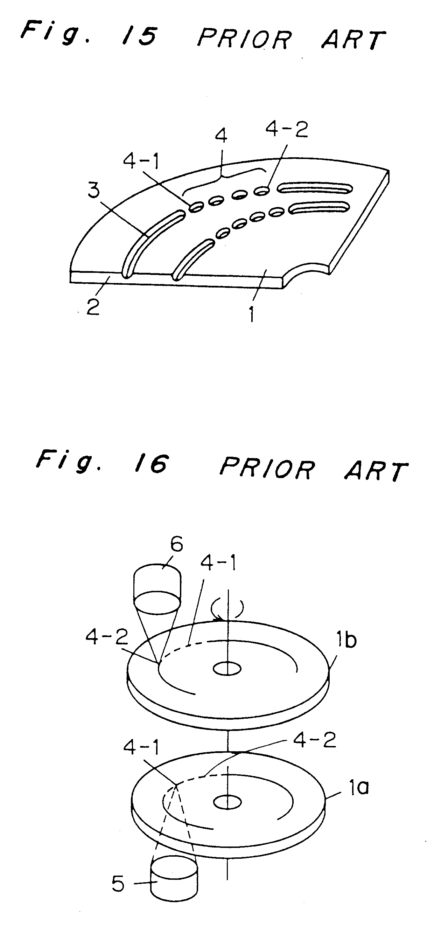

Fig. 15 depicts one of two substrates 1 of a conventional double-sided optical disc for use as a memory in a computer. Each of the two substrates 1 has a number of signal tracks 2 defined therein and having grooves 3, address signal pits 4 and the like for the prompt access of signals recorded thereon. The above demands, however, cannot be satisfied merely by bonding the two substrates 1a and 1b with respective signal surfaces opposed to each other, as shown in Fig. 16. The reason for this is that both the signal surfaces cannot be accessed by rotating the optical disc in one direction. More specifically, when the first and last address signal pits are denoted by 4-1 and 4-2, respectively, and when the two substrates 1a and 1b are rotated, for example, counterclockwise as viewed from above, address reading of the lower substrate 1a by an optical pickup 5 is properly executed from the signal pit 4-1 towards the signal pit 4-2, whereas that of the upper substrate 1b by an optical pickup 6 is improperly executed from the signal pit 4-2 towards the signal pit 4-1 in a direction counter to the direction of the address reading of the lower substrate 1a.

Because of this, it is necessary to prepare another upper substrate having a series of signal pits 4 formed counter to those of the lower substrate 1a so that the address signals on the upper substrate may be read from 4-1 towards 4-2, as is the case with the lower substrate 1a.

If such an upper substrate is bonded to the lower substrate 1a of Fig. 16 with respective signal surfaces opposed to each other, the address reading of both the substrates can be executed by rotating the optical disc only in one direction. In this case, however, if the address position of the lower substrate is not in agreement with that of the upper substrate, a rotational delay is caused, and hence, recording, reproduction or erasure on or from both the substrates cannot be executed simultaneously by the optical pickups 5 and 6.

### SUMMARY OF THE INVENTION

The present invention has been developed to overcome the above-described disadvantages.

It is accordingly an object of the present invention to provide an improved double-sided optical information carrier medium comprising two substrates which can be accessed simultaneously.

Another object of the present invention is to provide a double-sided optical information carrier medium of the above described type which has a simple construction and can be readily manufactured at a low cost.

A further object of the present invention is to provide a method of making such a double-sided optical information carrier medium.

In accomplishing the above and other objects, the information carrier medium according to the present invention comprises first and second substrates each having first and second surfaces opposite to each other. The first and second substrates are bonded together with the first surfaces thereof held in contact with other. The first surface of the first substrate has a first signal region and a first generally flat region defined radially inwardly of the first signal region. Likewise, the first surface of the second substrate has a second signal region and a second generally flat region defined radially inwardly of the second signal region. The first and second signal regions have first and second address information recorded thereon in the same direction circumferentially of the information carrier medium.

The information carrier medium according to the present invention further comprises first and second positioning means defined in the first and second flat regions of the first and second substrates, respectively. The first and second positioning means are matched in position with each other during bonding, thereby matching the position of the first address information with that of the second address information.

In another aspect of the present invention, a method of making the above information carrier medium comprises the steps of:
(a) recording the first address information on the first signal region in a direction circumferentially of the first substrate;
(b) recording the second address information on the second signal region in a direction counter to the direction in which the first address information is recorded, when the first surfaces of the respective substrates are oriented in the same direction;
(c) forming first and second positioning means in the first and second flat regions of the first and second substrates, respectively;
(d) detecting the first and second positioning means with the first surfaces of the respective substrates opposed;
(e) matching the first and second positioning means in position with each other, thereby matching a position of the first address information with that of the second address information; and
(f) bonding the first surfaces of the first and second substrates to each other.

A hole extending through each substrate at a location between the signal region and a center hole defined in the substrate is preferably used as each of the first and second positioning means. Such a hole can be detected either optically or mechanically.

Alternatively, a plurality of regularly spaced recesses may be formed on the flat region of each of the substrates. These recesses can be optically detected, and hence, can be used as the positioning means. These recesses may be replaced by a generally flat area encircled by a rugged region.

Furthermore, a notch formed at either an inner edge delimiting the center hole or an outer peripheral edge of each of the two substrates can also be used as the positioning means. A projection extending radially outwardly from the outer peripheral edge of each of the two substrates may be used as the positioning means.

In the double-sided optical information carrier medium according to the present invention, because the direction of recording and the position of the first address information are in agreement with those of the second address information, recording, reproduction or erasure on or from both of the substrates can be executed simultaneously using a recording and/or reproducing apparatus having two optical units which are to be placed on respective sides of the information carrier medium.

As occasion demands, the position of the first address information may be intentionally shifted a certain length from that of the second address information.

In applications where the recording and/or reproducing apparatus has only one signal processor for production cost reduction, two signal surfaces of the double-sided information carrier medium are desired to be alternately utilized for the prompt access to any one of sectors dividing the signal surfaces. According to the present invention, because the relative position of the two substrates is determined, the time loss caused by a rotational delay of the medium during switching between the two signal surfaces can be minimized, thereby enabling high-speed processing for a large amount of information.

### BRIEF DESCRIPTION OF THE DRAWINGS

The above and other objects and features of the present invention will become more apparent from the following description of preferred embodiments thereof with reference to the accompanying drawings, throughout which like parts are designated by like reference numerals, and wherein:
Fig. 1 is a sectional view of a double-sided information carrier disc according to a first embodiment of the present invention;
Fig. 2 is a sectional view of an upper substrate 1 adsorbed by an adsorption unit at the time the position thereof is being detected;
Fig. 3 is a view similar to Fig. 2, but indicating a lower substrate adsorbed by another adsorption unit;
Fig. 4 is a sectional view of the upper and lower substrates during bonding;
Fig. 5 is a view similar to Fig. 3, but indicating a lower substrate of a double-sided information carrier disc according to a second embodiment of the present invention;
Fig. 6 is a sectional view of the lower substrate of Fig. 5 at the time the position thereof is being detected;
Fig. 7 is a sectional view of the lower substrate of Fig. 5 adsorbed by an adsorption table;
Fig. 8 is a sectional of two substrates during bonding;
Fig. 9 is a view similar to Fig. 1, but indicating a double-sided information carrier disc according to a third embodiment of the present invention;
Fig. 10 is a sectional view of two substrates of the information carrier disc of Fig. 9 prior to bonding;
Fig. 11 is a perspective view of a double-sided information carrier disc according to a fourth embodiment of the present invention;
Fig. 12 is a fragmentary perspective view, on an enlarged scale, of notches formed at the periphery of the disc of Fig. 11 at the time the notches are in engagement with a pin during positioning;
Figs. 13a through 13c are fragmentary top plan views of the disc indicating different modifications of the notches shown in Figs. 11 and 12;
Figs. 14a through 14d are views similar to Figs. 13a through 13c, but indicating different types of projections to be used in place of the notches;
Fig. 15 is a fragmentary perspective view of a substrate of a conventional double-sided information carrier disc; and
Fig. 16 is a schematic perspective view of two substrates of the conventional information carrier disc during recording or reproduction.

### DETAILED DESCRIPTION OF THE PREFERRED EMBODIMENTS

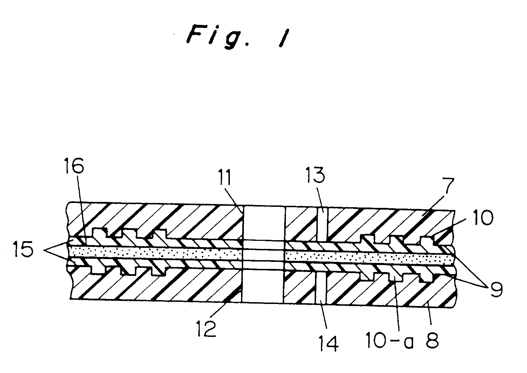

Referring now to the drawings, there is shown in Fig. 1 a double-sided optical information carrier disc according to a first embodiment of the present invention.

The information carrier disc comprises first and second disc substrates 7 and 8 made of polycarbonate, each of which has first and second surfaces opposite to each other. The first surface of each of the first and second substrates 7 and 8 is a signal surface 9 having a signal region and a generally flat region defined radially inwardly of the signal region. A recording layer 15 is formed on the first surface 9 of each of the first and second substrates 7 and 8. Each signal region has a plurality of regularly spaced guide grooves 10 (10-a) defined therein and extending in a direction circumferentially of the disc. Although address information is recorded on these guide grooves 10 and 10-a, the direction of recording on the first substrate 7 is counter to that of recording on the second substrate 8, when the first surfaces 9 of the two substrates 7 and 8 are oriented in the same direction. The two substrates 7 and 8 have center holes 11 and 12 and positioning holes 13 and 14, respectively. The positioning holes 13 and 14 are used to appropriately position the two substrates 7 and 8 during bonding, and each of them extends through the substrate 7 at the generally flat region positioned between the center hole 11 (12) and the signal region 10 (10-a). The preferred diameter of these positioning holes 13 and 14 ranges from 0.5 mm to 2.0 mm. The two substrates 7 and 8 are bonded to each other by a bonding material 16 such that the position of the address information recorded on the guide grooves 10 are in agreement with that of the address information recorded on the guide grooves 10-a. The substrates 7 and 8 are made by injection molding, and the positioning holes 13 and 14 and the guide grooves 10 and 10-a having the address information are formed at the same time.

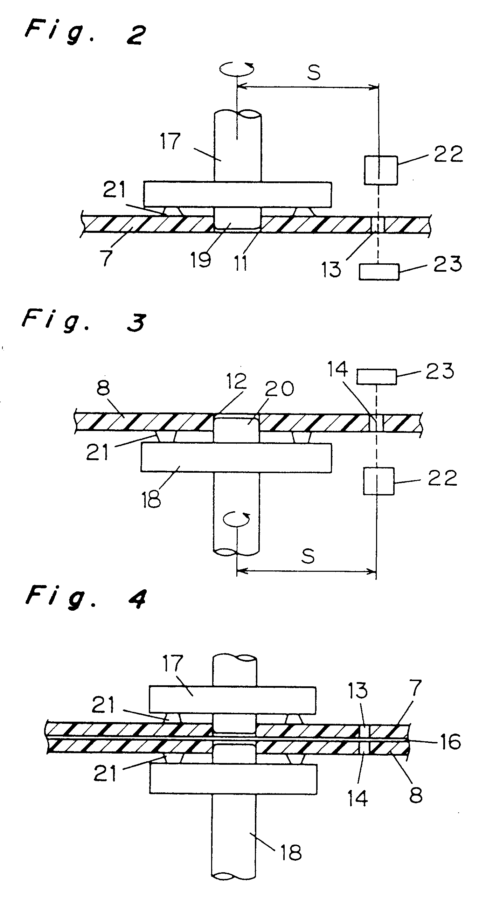

Figs. 2 through 4 depict positioning and bonding processes for the two substrates 7 and 8.

As shown in Figs. 2 through 4, a bonding machine comprises two rotary adsorption units 17 and 18 for adsorbing and rotating the substrates 7 and 8, respectively. The rotary adsorption units 17 and 18 have respective center shafts 19 and 20 which are to be inserted into the center holes 11 and 12 for proper centering of the substrates 7 and 8, respectively. Each of the rotary adsorption units 17 and 18 is provided with a plurality of vacuum pads 21 for adsorbing and holding the associated substrate 7 (8). As best shown in Figs. 2 and 3, a light emitting element 22 and a light receiving element 23 are located a distance S away from the center shaft 17 (18) of each rotary adsorption unit 17 (18). Upon insertion of the center shafts 19 and 20 into the center holes 11 and 12 of the substrates 7 and 8, respectively, when the substrates 7 and 8 are slowly rotated, the positioning holes 13 and 14 come to respective locations in line with the associated light emitting and light receiving elements 22 and 23. When light emitted from the light emitting elements 22 is received by the associated light receiving elements 23, the light receiving elements 23 are turned on, and the rotation of the rotary adsorption units 17 and 18 is stopped. At this moment, the two substrates 7 and 8 are positioned such that the positioning holes 13 and 14 thereof are in alignment with each other. Under such conditions, the light emitting and light receiving elements 22 and 23 are moved radially outwardly away from the substrates 7 and 8, respectively. Thereafter, the bonding material 16 is coated on the recording layer 15 of at least one of the two substrates 7 and 8, and the substrates 7 and 8 are bonded to each other. Upon releasement of the vacuum adsorption, the double-sided information carrier disc is completed.

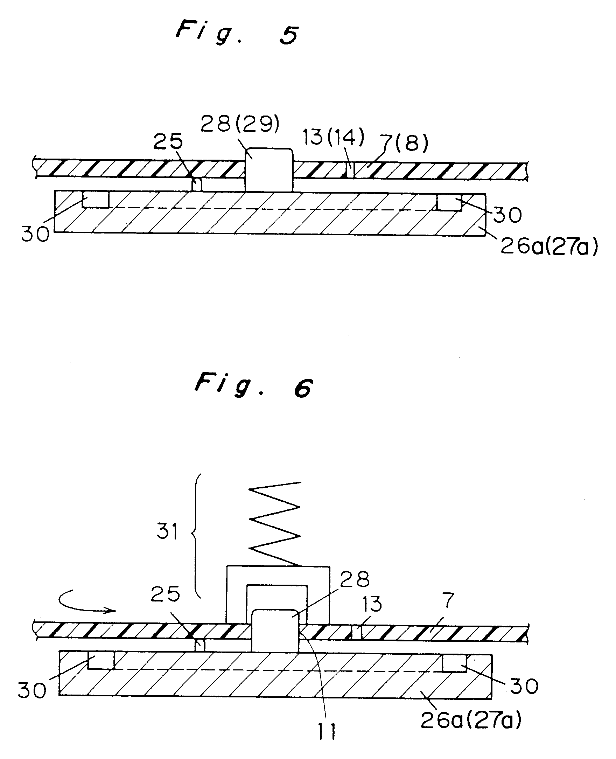

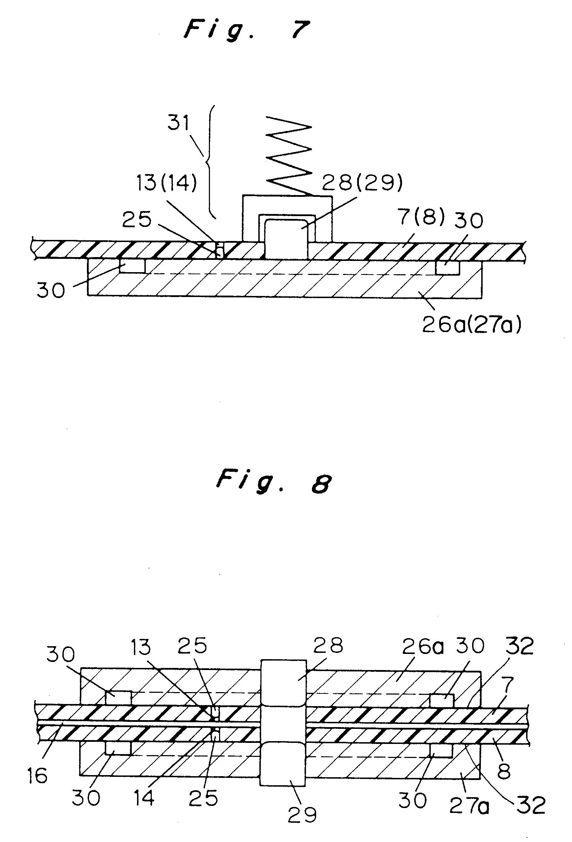

Figs. 5 through 7 depict one of two substrates 7 and 8 of a double-sided information carrier disc according to a second embodiment of the present invention. Fig. 8 depicts the two substrates 7 and 8 during bonding.

Whereas the proper positioning of the two substrates 7 and 8 is optically carried out in the first embodiment shown in Figs. 2 through 4, such positioning is mechanically carried out in the second embodiment. In this embodiment, as best shown in Fig. 8, a bonding machine comprises two vacuum adsorption tables 26a and 27a each having a positioning projection 25 formed thereon and a groove 30 defined therein in a direction circumferentially thereof for vacuum adsorption of the substrates 7 and 8. The adsorption tables 26a and 27a have respective vertically movable center shafts 28 and 29 which are to be inserted into the center holes 11 and 12 for proper positioning, respectively.

Prior to bonding, the second surface of the substrate 7 is initially brought into slight contact with the projection 25, and the substrate 7 is subsequently slowly rotated. When the positioning hole 13 comes to a location in line with the projection 25, the substrate 7 is moved downwards by the action of the biasing force of a pressure unit 31 and is brought into contact with the adsorption table 26a. At this moment, the substrate 7 is adsorbed and held by the adsorption groove 30, and a vacuum switch (not shown) mounted on a vacuum line communicating with the adsorption groove 30 is turned on. Upon receipt of a signal from this vacuum switch, the pressure unit 31 is moved away from the adsorption table 26a. The center shaft 28 of the adsorption table 26 is then moved downwards until an upper end of the center shaft 28 comes to substantially the same level as an adsorption surface 32.

This operation is equally carried out with respect to the substrate 8 using the adsorption table 27a, and the two substrates 7 and 8 are placed such that respective projections 25 are in alignment with each other, as best shown in Fig. 8. Thereafter, the recording layer of at least one of the two substrates 7 and 8 is coated with the bonding material 16, and the two substrates 7 and 8 are bonded to each other with the first surfaces 9 thereof opposed.

The double-sided disc made in the above-described manner is advantageous in that recording, reproduction, or erasure can be carried out simultaneously with respect to both surfaces thereof without turning the disc upside down or without changing the direction of rotation of the disc.

It is to be noted that in this embodiment, although the substrates 7 and 8 are rotated with the adsorption tables 26a and 27a held stationary, the latter may be rotated with the former held stationary.

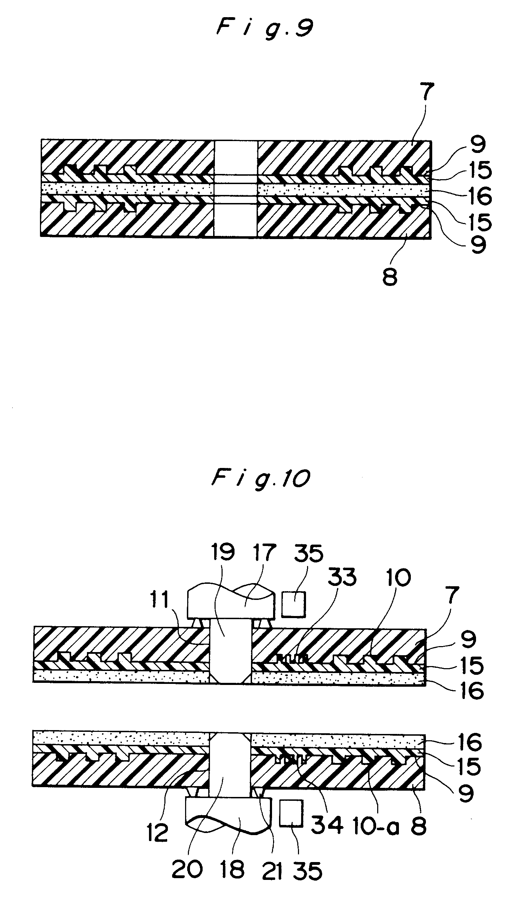

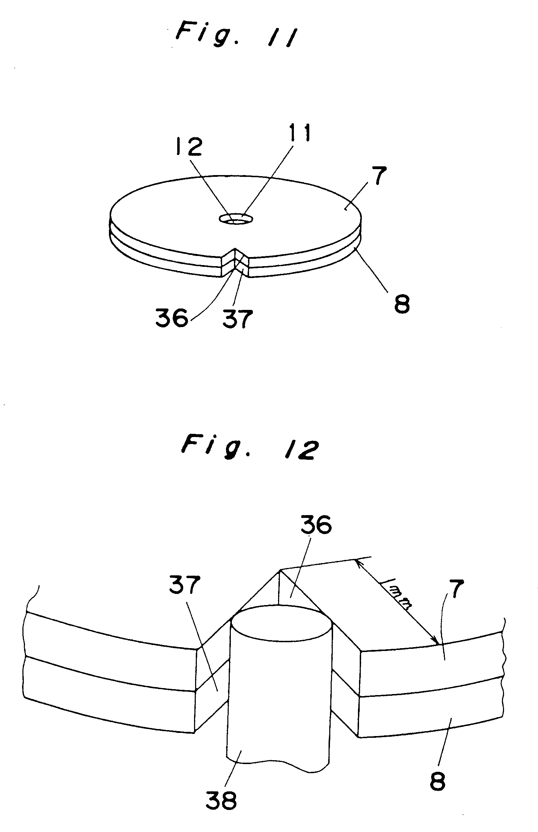

A double-sided information carrier disc according to a third embodiment of the present invention is discussed hereinafter with reference to Figs. 9 and 10.

This embodiment differs from the first and second embodiments in that the information carrier disc has optically detectable positioning marks 33 and 34 formed on the generally flat regions thereof, respectively. Prior to bonding, the positioning marks 33 and 34 are detected to determine the relative position of the two substrates 7 and 8. As shown in Fig. 10, each of the positioning marks 33 and 34 is made up of a group of regularly spaced recesses formed on the generally flat region at a location between the center hole 11 (12) and the signal region 10 (10-a) on which address information is recorded. Prior to the bonding of the two substrates 7 and 8, the center shafts 19 and 20 of the rotary adsorption units 17 and 18 are inserted into the center holes 11 and 12 of the substrates 7 and 8 for proper centering thereof, respectively, and the substrates 7 and 8 are adsorbed and held by the corresponding vacuum pads 21, as shown in Fig. 10. Under such conditions, the rotary adsorption units 17 and 18 are both rotated. When each of the positioning marks 33 and 34 comes to the location of a position detector 35 disposed in the proximity of the center shaft 17 (18), the amount of light received by the position detector 35 is reduced due to the scattering of light in the presence of the recesses 33 (34). Upon detection of such reduction in the amount of light received, the rotation of the rotary adsorption unit 17 (18) is stopped. Thereafter, at least one of the substrates 7 and 8 is coated with the bonding material 16, and the substrates 7 and 8 are bonded to each other. The positioning marks 33 and 34 are positioned such that after the bonding, address information recorded on the first surface 9 of one substrate 7 is in positional agreement with that recorded on the first surface 9 of the other substrate 8. The two substrates 7 and 8 are made by injection molding, and the positioning marks 33 and 34 and the guide grooves 10 and 10-a having the address information are formed at the same time.

Preferably, each of the position detectors 35 comprises a light emitting element and a light receiving element.

It is to be noted that in this embodiment, although each of the position detectors 35 is disposed so as to confront the second surface of each of the substrates 7 and 8, the former may be disposed so as to confront the first surface of the latter.

It is also to be noted that although each of the positioning marks 33 and 34 is made up of a group of recesses formed on the generally flat region, it may be a generally flat area encircled by a rugged region.

Figs. 11 and 12 depict a double-sided information carrier disc according to a fourth embodiment of the present invention. This embodiment differs from the first, second, and third embodiments in that the two substrates 7 and 8 have respective positioning notches 36 and 37 defined therein at either inner edges delimiting the center holes 11 and 12 or outer peripheral edges thereof, respectively. During the bonding of the substrates 7 and 8, these notches 36 and 37 are mechanically detected, thereby appropriately positioning the substrates 7 and 8.

In place of the notches 36 and 37, the two substrates 7 and 8 may be provided with respective positioning projections extending radially outwardly from the outer peripheral edges thereof.

When the substrates 7 and 8 are made by injection molding, the notches or projections are formed at the same time, together with the guide grooves having the address information. The positioning notches or projections are positioned such that when they are in positional agreement with each other, address information recorded on the first surface 9 of the substrate 7 is also in positional agreement with that recorded on the first surface 9 of the substrate 8. Prior to bonding, the center shafts 19 and 20 of the rotary adsorption units 17 and 18 are initially inserted into the center holes 11 and 12 of the substrates 7 and 8 for proper centering thereof, respectively, and the two substrates 7 and 8 are adsorbed and held by the corresponding vacuum pads 21. Under such conditions, the two notches 36 and 37 are brought into engagement with a position detector pin 38 movably mounted on, for example, the bonding machine, as shown in Fig. 12, by slowly rotating the rotary adsorption units 17 and 18. At this moment, the rotation of the rotary adsorption units 17 and 18 is stopped. Thereafter, the position detector pin 38 is moved away from the substrates 7 and 8, and a bonding material is coated on the recording layer of at least one of the substrates 7 and 8, and the two substrates 7 and 8 are bonded to each other. V-shaped notches having a depth of about 1 mm are preferred as the positioning notches 36 and 37. The depth far greater than 1 mm is not preferred because the signal region becomes narrow and the recording capacity is reduced. The depth far less than 1 mm is also not preferred because the proper positioning cannot be readily achieved.

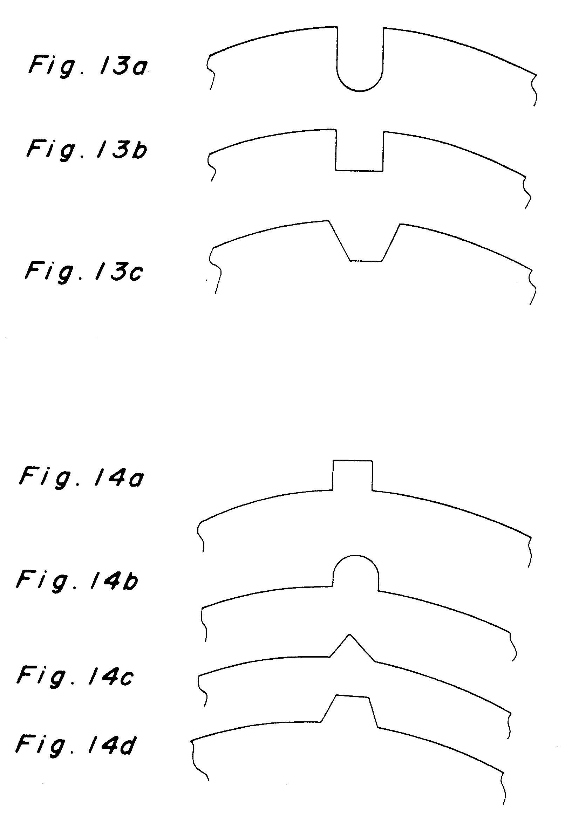

It is to be noted that although the V-shaped notches are employed in this embodiment, the shape of the notches is not limited to a figure "V". U-shaped, rectangular, or trapezoidal notches as shown in Figs. 13a through 13c, respectively, are also applicable. The notches may be replaced by projections extending radially outwardly from the outer peripheral edges of the substrates 7 and 8, respectively, as shown in Figs. 14a through 14d. The preferred height of the projections is less than 2 mm.

It is also to be noted that the recording layer, although described as comprised of a single ply, may be a multi-ply layer.

It is further to be noted that the position of the address information on one substrate may be intentionally shifted a certain length from that of the address information on the other substrate.

It is also to be noted that a hot-melt adhesive is preferably used as the bonding material.

As is clear from the above, according to the present invention, the relative position of the two substrates is determined by detecting either optically or mechanically the positioning means such as, for example, the positioning holes, projections, notches or the like, formed in or on the substrates. The address information on the two substrates can be matched in position with each other by matching the position of the positioning means and by bonding the two substrates to each other. The double-sided information carrier disc according to the present invention is particularly advantageous in that the two substrates can be accessed simultaneously without complicating the structure thereof.

Although the present invention has been fully described by way of examples with reference to the accompanying drawings, it is to be noted here that various changes and modifications will be apparent to those skilled in the art. Therefore, unless such changes and modifications otherwise depart from the spirit and scope of the present invention, they should be construed as being included therein.

## Claims

1. A double-sided optical information carrier medium comprising;
a first substrate (7) having first and second surfaces opposite to each other, said first surface (9) of said first substrate (7) having a first signal region and a first generally flat region defined radially inwardly of said first signal region, said first signal region having first address information recorded thereon in a direction circumferentially of said information carrier medium;
a second substrate (8) having first and second surfaces opposite to each other, said first surface (9) of said second substrate (8) having a second signal region and a second generally flat region defined radially inwardly of said second signal region, said second substrate (8) being bonded to said first substrate (7) with said first surfaces (9) of said first and second substrates (7, 8) held in contact with each other, said second signal region having second address information recorded thereon in said direction; and
first and second positioning means defined in said first and second flat regions of said first and second substrates (7, 8), respectively, said first and second positioning means being matched in position with each other, thereby determining a relative position of said first and second address information.

2. The information carrier medium according to claim 1, wherein a position of said first address information is generally in agreement with that of said second address information.

3. The information carrier medium according to claim 1, wherein said first and second substrates (7, 8) are bonded together using a hot-melt adhesive.

4. The information carrier medium according to claim 1, wherein said first positioning means is a first positioning hole (13) extending through said first substrate (7) at a location between said first signal region and a center hole (11) defined in said first substrate (7), and said second positioning means is a second positioning hole (14) extending through said second substrate (8) at a location between said second signal region and a center hole (12) defined in said second substrate (8), said first and second positioning holes (13, 14) being optically detected prior to bonding.

5. The information carrier medium according to claim 1, wherein said first positioning means is a first positioning hole (13) extending through said first substrate (7) at a location between said first signal region and a center hole (11) defined in said first substrate (7), and said second positioning means is a second positioning hole (14) extending through said second substrate (8) at a location between said second signal region and a center hole (12) defined in said second substrate (8), said first and second positioning holes (13, 14) being mechanically detected prior to bonding.

6. The information carrier medium according to claim 1, wherein said first positioning means is a first positioning mark (33) formed on said first flat region of said first substrate (7), and said second positioning means is a second positioning mark (34) formed on said second flat region of said second substrate (8), said first and second positioning marks (33, 34) being optically detected prior to bonding.

7. The information carrier medium according to claim 6, wherein each of said first and second positioning marks (33, 34) is made up of a plurality of regularly spaced recesses (33, 34) formed on each of said first and second flat regions.

8. The information carrier medium according to claim 6, wherein each of said first and second positioning marks is a generally flat area encircled by a rugged region.

9. An optical information carrier medium comprising;
a first substrate (7) having first and second surfaces opposite to each other, said first surface (9) of said first substrate (7) having a first signal region on which first address information is recorded in a direction circumferentially of said information carrier medium;
a second substrate (8) having first and second surfaces opposite to each other, said second substrate (8) being bonded to said first substrate (7) with said first surfaces (9) of said first and second substrates (7, 8) held in contact with each other, said first surface (9) of said second substrate (8) having a second signal region on which second address information is recorded in said direction; and
first and second positioning means each defined in at least one of an inner edge delimiting a center hole (11, 12) of each of said first and second substrates (7, 8) and an outer peripheral edge of each of said first and second substrates (7, 8), respectively, said first and second positioning means being mechanically matched in position with each other, thereby determining a relative position of said first and second address information.

10. The information carrier medium according to claim 9, wherein a position of said first address information is generally in agreement with that of said second address information.

11. The information carrier medium according to claim 9, wherein said first and second substrates (7, 8) are bonded together using a hot-melt adhesive.

12. The information carrier medium according to claim 9, wherein each of said first and second positioning means is a notch (36, 37).

13. The information carrier medium according to claim 9, wherein each of said first and second positioning means is a projection extending radially outwardly from said outer peripheral edge of each of said first and second substrates (7, 8).

14. A method of making a double-sided optical information carrier medium which comprises first and second substrates (7, 8) each having first and second surfaces opposite to each other, said first surface (9) of said first substrate (7) having a first signal region and a first generally flat region defined radially inwardly of said first signal region, said first surface (9) of said second substrate (8) having a second signal region and a second generally flat region defined radially inwardly of said second signal region, said method comprising the steps of:
recording first address information on said first signal region in a direction circumferentially of said first substrate (7);
recording second address information on said second signal region in a direction counter to the direction in which said first address information is recorded, when said first surfaces (9) of said respective substrates (7, 8) are oriented in a same direction;
forming first and second positioning means in said first and second flat regions of said first and second substrates (7, 8), respectively;
detecting said first and second positioning means with said first surfaces (9) of said respective substrates (7, 8) opposed;
matching said first and second positioning means in position with each other, thereby determining a relative position of said first and second address information; and
bonding said first surfaces (9) of said first and second substrates (7, 8) to each other.

15. The method according to claim 14, wherein a position of said first address information is generally in agreement with that of said second address information.

16. The method according to claim 14, wherein said first positioning means is a first positioning hole (13) extending through said first substrate (7) at a location between said first signal region and a center hole (11) defined in said first substrate (7), and said second positioning means is a second positioning hole (14) extending through said second substrate (8) at a location between said second signal region and a center hole (12) defined in said second substrate (8).

17. The method according to claim 16, wherein said first and second positioning holes (13, 14) are optically detected.

18. The method according to claim 16, wherein said first and second positioning holes (13, 14) are mechanically detected.

19. The method according to claim 14, wherein said first positioning means is a first positioning mark (33) formed on said first flat region of said first substrate (7), and said second positioning means is a second positioning mark (34) formed on said second flat region of said second substrate (8), and wherein said first and second positioning marks (33, 34) are optically detected.

20. The method according to claim 19, wherein each of said first and second positioning marks (33, 34) is made up of a plurality of regularly spaced recesses (33, 34) formed on each of said first and second flat regions.

21. The information carrier medium according to claim 19, wherein each of said first and second positioning marks is a generally flat area encircled by a rugged region.

22. A method of making a double-sided optical information carrier medium which comprises first and second substrates (7, 8) each having first and second surfaces opposite to each other, said first surface (9) of said first substrate (7) having a first signal region, said first surface (9) of said second substrate (8) having a second signal region, said method comprising the steps of:
recording first address information on said first signal region in a direction circumferentially of said information carrier medium;
recording second address information on said second signal region in a direction counter to the direction in which said first address information is recorded, when said first surfaces (9) of said respective substrates (7, 8) are oriented in a same direction;
forming first and second positioning means at least one of an inner edge delimiting a center hole (11, 12) of each of said first and second substrates (7, 8) and an outer peripheral edge of each of said first and second substrates (7, 8), respectively;
detecting said first and second positioning means with said first surfaces (9) of said respective substrates (7, 8) opposed;
matching said first and second positioning means in position with each other, thereby determining a relative position of said first and second address information; and
bonding said first surfaces (9) of said first and second substrates (7, 8) to each other.

23. The method according to claim 22, wherein a position of said first address information is generally in agreement with that of said second address information.

24. The method according to claim 22, wherein each of said first and second positioning means is a notch (36, 37).

25. The method according to claim 22, wherein each of said first and second positioning means is a projection extending radially outwardly from said outer peripheral edge of each of said first and second substrates (7, 8).
